# EUROPÄISCHE PATENTSCHRIFT

(11) **EP 3 711 465 B1**
(45) Veröffentlichungstag und Bekanntmachung des Hinweises auf die Patenterteilung: **04.05.2022**
(21) Anmeldenummer: 20161958.2
(22) Anmeldetag: 10.03.2020
(51) Int. Cl.: A01B 33/00, A01B 45/02, A01D 34/08, B62D 51/06

(54) **EINACHSFAHRZEUG**
SINGLE AXLE VEHICLE
VÉHICULE À ESSIEU UNIQUE

(30) Priorität: 18.03.2019 DE 102019106793
(43) Veröffentlichungstag der Anmeldung: 23.09.2020
(73) Patentinhaber: Brielmaier Motormäher GmbH, 88693 Deggenhausertal (DE)
(72) Erfinder: BRIELMAIER, Martin, 88048 Friedrichshafen (DE)
(74) Vertreter: Patentanwälte und Rechtsanwalt Weiß, Arat & Partner mbB

(56) Entgegenhaltungen:
- DE-A1-102005 026 754
- DE-A1-102005 026 761
- ANONYMOUS: "Original-Betriebsanleitung Brielmaier Motormäher", ORIGINAL-BETRIEBSANLEITUNG, BRIELMAIER MOTORMÄHER GMBH, FRIEDRICHSHAFEN, GERMANY , 30. November 2013 (2013-11-30), Seiten 1-56, XP009520012, Gefunden im Internet: URL:https://www.yumpu.com/de/document/view /19446219/original-betriebsanleitung-briel maier-motormaher
- Paar ET AL: "Die Königsklasse der Motormäher", Landwirt, 30. Juni 2010 (2010-06-30), Seiten 58-64, XP055716887, Gefunden im Internet: URL:https://www.yumpu.com/de/document/read /22002986/vergleichstest-der-fortschrittli che-landwirt-brielmaier [gefunden am 2020-07-21]

## Beschreibung

### Technisches Gebiet

Die Erfindung betrifft ein Einachsfahrzeug nach dem Oberbegriff des Anspruchs 1 oder 2.

### Stand der Technik

Derartige Einachsfahrzeuge sind bereits in vielfältiger Form und Ausgestaltung bekannt und gebräuchlich. So wird beispielsweise in der DE 10 2005 026 754 A1 ein Einachsfahrzeug offenbart, bei dem der Antrieb für zumindest eine Stachelwalze in der Stachelwalze selbst angeordnet ist.

Außerdem werden Einachsfahrzeuge mit Stachelwalzen von Paar et al. mit dem Titel "Die Königsklasse der Motormäher" in der Zeitschrift "Landwirt" vom 30.6.2010, Seite 58-64 und eine Original-Betriebsanleitung Brielmaier Motormäher GmbH vom 30.11.2013, Seiten 1 bis 56 offenbart, welche teilweise die Merkmale des erfindungsgemäßen Oberbegriffs aufweisen.

Außerdem wird auf die DE 10 2005 026 761 A1 hingewiesen, welche ein Fahrzeug mit zumindest einer Stachelwalze mit einem Walzenmantel aufweist, auf dessen Oberfläche sich Vorsprünge mit einer Spitze befinden, wobei die Vorsprünge pyramiden- oder kegelförmig als Stacheln ausgebildet sind.

### Aufgabe der Erfindung

Die Aufgabe der vorliegenden Erfindung ist es, ein Einachsfahrzeug zur Verfügung zu stellen, wobei der Antrieb des Einachsfahrzeugs störungsfreier und dadurch auch umweltfreundlicher betrieben werden kann. Insbesondere soll durch eine bessere Kühlung der verbrauch des Antriebs und die Funktionsfähigkeit der Gesamtkonstruktion des Einachsfahrzeuges verbessert werden.

### Lösung der Aufgabe

Zur Lösung der Aufgabe führen die Merkmale nach dem Anspruch 1 oder 2.

Vorteilhafte Ausgestaltungen sind in den Unteransprüchen beschrieben.

Das erfindungsgemäße Einachsfahrzeug weist einen Antrieb, einen Kühler, eine erste Stachelwalze und eine zweite Stachelwalze auf. Bei dem Antrieb handelt es sich im bevorzugten Ausführungsbeispiel um einen Verbrennungsmotor. Denkbar sind auch grundsätzlich andere Antriebsformen.

Grundsätzlich erwärmt sich der Antrieb und bedarf daher der Kühlung. Dazu wird der Kühler eingesetzt. Der Kühler ist mit dem Antrieb wirkverbunden. Wirkverbindung bedeutet hierbei, dass ein Kühlkreislauf zwischen dem Antrieb und dem Kühler angeordnet ist. Der Kühlkreislauf weist ein Kühlmedium auf. Das Kühlmedium ist bevorzugt Öl, denkbar ist aber auch der Einsatz von Wasser oder einem anderen flüssigen oder gasförmigen Medium.

Zwischen der ersten Stachelwalze und der zweiten Stachelwalze ist ein Querträger angeordnet ist, wobei sich auf dem Querträger wiederum der Antrieb und der Kühler befinden, wobei der Antrieb mit den beiden Stachelwalzen kraftübertragend verbunden ist. Kraftübertragend bedeutet hierbei die Weitergabe der Energie des Antriebs an die beiden Stachelwalzen beispielsweise über ein entsprechendes Getriebe, Übersetzungen und eine Welle.

Dabei weisen die Stachelwalzen jeweils einen Walzenmantel auf, dessen Oberfläche sich Vorsprünge mit einer Spitze befinden, wobei die Vorsprünge pyramiden- oder kegelförmig als Stacheln ausgebildet sind. Dabei ist die Spitze auf eine Basis des Vorsprunges aufgesetzt und lösbar mit der Basis verbunden ist, wobei die Vorsprünge zumindest teilweise einstückig und dabei aus dem Walzenmantel ausgezogen sind. Dabei verläuft ein äußerer Mantel oder Seitenflächen des Vorsprunges konkav nach innen gewölbt von der Spitze zu einem Basisbereich verläuft/en.

Dabei weist die Spitze eine Gewindebohrung zur Aufnahme eines Schraubenbolzens auf. Außerdem ist der Schraubenbolzen mit einer Scheibe od. dgl. durchsetzt, welche wiederum in die Basis eingesetzt ist.

Die Scheibe besitzt dabei einen grösseren Durchmesser als eine obere Öffnung der Basis, welche von der Spitze überdeckt ist. Weiter ist die Spitze mit einem abgestützten Ringkragen in die Öffnung der Basis eingesetzt.

Die Spitze wiederum besteht dabei aus einem relativ verschleißfesten Kunststoff.

In besonderer Weise soll hierbei der Kühler zu der ersten Stachelwalze und/oder der zweiten Stachelwalze hin luftaufnehmend angeordnet sein, wobei die erste Stachelwalze und/oder zweite Stachelwalze luftdurchlässig ausgebildet ist/sind. Das bedeutet im einzelnen, dass die Stachelwalzen derart luftdurchlässig sein müssen, dass sie entweder über die Lauffläche oder aber noch bevorzugter über die von dem Antrieb wegweisenden Stirnflächen Luft in den Innenbereich der Stachelwalzen einfließen kann, um aus dem Innenbereich auf den Kühler beaufschlagt werden zu können. Dies hat den Vorteil, dass nicht mehr die verstaubte Luft von der Frontseite des Einachsfahrzeugs in den Kühler gesogen werden muss, sondern relativ staubfreie Luft von den Seiten des Einachsfahrzeugs angesogen werden kann. Dabei ist entweder der eine Kühler zu der ersten Stachelwalze oder zu der zweiten Stachelwalze hin luftaufnehmend angeordnet oder in einem anderen Ausführungsbeispiel sind zwei kleinere Kühler jeweils zu einer der Stachelwalzen hin luftaufnehmend angeordnet.

Der Kühler kann in einem anderen Ausführungsbeispiel in der ersten Stachelwalze und/oder in der zweiten Stachelwalze angeordnet ist, wobei die erste Stachelwalze und/oder zweite Stachelwalze luftdurchlässig ausgebildet ist/sind. In diesem Ausführungsbeispiel müsste dann der Kühlkreislauf bzw. das Kühlmedium aus der jeweiligen Stachelwalze heraus zu dem Antrieb gebracht werden.

Luftaufnehmend bedeutet dabei, dass der Bereich des Kühlers, der mit der kühlenden Luft beaufschlagt werden muss zu der oder den jeweiligen Stachelwalzen hin angeordnet ist. Normalerweise kommt das Einachsfahrzeug der Art zum Einsatz, das in einem Frontbereich ein Arbeitsgerät angeordnet ist, wobei dieses Arbeitsgerät beispielsweise durch Medien oder andere Arbeiten Staub aufwirbelt oder Staub erzeugt.

Dieser Staub wiederum wird dann bei einem Einachsfahrzeug nach dem Stand der Technik auf den Kühler beaufschlagt, was zur schnellen Verschmutzung der Kühlerlamellen führt und die Kühlleistung des Kühlers beträchtlich verringert. Dies wiederum führt zu dem Nachteil, dass der Antrieb zu heiß betrieben wird und dadurch mehr Kraftstoff benötigt. Bei der erfindungsgemäßen Lösung wird der Kühler durch seine Ausrichtung hin zu den Stachelwalzen von dem angesprochenen Staub größtenteils freigehalten.

In einem anderen Ausführungsbeispiel ist es auch denkbar, dass der Kühler direkt in die Stachelwalze oder die Stachelwalzen integriert ist und lediglich das Kühlmedium dann noch zu dem Antrieb geleitet wird. Dadurch, dass die kühle Luft aus dem Innenbereich der Stachelwalze stammt, lässt sich ein weiterer Vorteil erkennen.

Wenn die Luft an der Außenseite der Stachelwalze in den Innenbereich der Stachelwalze eingesogen wird, wird sie dabei im Innenbereich der Stachelwalze während des Durchtritts durch die Stachelwalze heruntergekühlt, sodass die Leistung des Kühlers weiter verstärkt wird. Dieses Herunterkühlen erfolgt auch dadurch, dass die Stachelwalze, welche größtenteils aus einem metallenen Werkstoff besteht, die Kühle des Untergrundes, auf welchem die Stachelwalze abrollt aufnimmt und dadurch wiederum die durchtretende Luft abkühlt.

In dem Innenbereich der Stachelwalzen ist jeweils eine Kraftübertragung gegeben. Dabei handelt es sich um eine Funktionseinheit, welche die Antriebskraft des Antriebs rotierend auf die jeweilige Stachelwalze übertragen soll.

Die Stachelwalzen weisen auf einer Außenseite eine Vielzahl von austauschbaren Stacheln auf. Außenseite bedeutet dabei die Abrollfläche der jeweiligen Stachelwalze. Die austauschbaren Stacheln können dabei ebenfalls einen metallenen Werkstoff sein oder aber auch aus einem Kunststoff. Die Auswahl des Materials der Stacheln unterliegt den Wünschen und Anforderungen des jeweiligen Nutzers.

Dabei bestehen die erste Stachelwalze und/oder die zweite Stachelwalze jeweils aus einer Walzenröhre. Dabei handelt es sich um eine an zwei Enden offene Zylinderkonstruktion. Die Außenseite stellt dabei den Außenumfang der Zylinderkonstruktion dar, welcher auch einen größeren Umfang aufweist, als der Innenbereich der Walzenröhre. Hier kann auch angedacht werden, dass die Mantelfläche der Stachelwalze bzw. der Walzenröhre Belüftungsöffnungen aufweisen kann. Dies kann ergänzend zu weiteren solchen Öffnungen erfolgen oder auch alleinig genutzt werden.

Weiter sind in dem Innenbereich der Walzenröhre eine Außenschale und eine Innenschale angeordnet, wobei die Außenschale und die Innenschale eine Trichterform aufweisen, wobei die erste Trichterform der Außenschale einen ersten Boden ausbildet und die zweite Trichterform einen zweiten Boden ausbildet.

Die Trichterformen weisen dabei jeweils den einen Boden auf, der im Wesentlichen plan ist. Von diesen Böden laufen die Trichterwände expandierend, also umfangsvergrößernd und abgespreizt weg.

In diesem Zusammenhang weist die Außenschale eine Ansaugöffnung auf. Diese Ansaugöffnung ist in einem bevorzugten Ausführungsbeispiel kreisrund und/oder oval ausgeführt. Bevorzugt sind eine Vielzahl von Ansaugöffnungen in der Außenschale angeordnet. Sie sind dabei in die jeweilige Trichterwand eingelassen und dienen dem Einlassen von Frischluft in die Walzenröhre, wobei die Frischluft von der dem Antrieb bzw. dem Kühler abgewandten Seite in die Walzenröhre einfließt. In einem besonders bevorzugten Ausführungsbeispiel weisen die Ansaugöffnungen nahe einer Außenbördelung der Ansaugöffnung einen größeren Umfang auf, als die Ansaugöffnungen, welche nahe dem ersten Boden ausgebildet sind. Dadurch wird ein besonders vorteilhaftes Strömungsverhalten erreicht.

Außerdem weist die Innenschale eine Durchlassöffnung auf. Vielmehr handelt es sich um eine Vielzahl von Durchlassöffnungen. In gleicher Weise umfasst die Innenschale eine Innenbördelung. Diese Durchlassöffnung ist in einem bevorzugten Ausführungsbeispiel kreisrund und/oder oval ausgeführt. Sie ist dabei in die jeweilige Trichterwand eingelassen und dient dem Auslassen von Frischluft aus der Walzenröhre, wobei die Frischluft an der dem Antrieb bzw. dem Kühler zugewandten Seite aus der Walzenröhre ausfließt. In einem besonders bevorzugten Ausführungsbeispiel weisen die Durchlassöffnungen nahe der Innenbördelung einen größeren Umfang auf, als die Durchlassöffnungen, welche nahe dem zweiten Boden ausgebildet sind. Dadurch wird ein besonders vorteilhaftes Strömungsverhalten erreicht.

Der erste Boden und der zweite Boden bilden im Einbauzustand einen gemeinsamen Durchbruch aus, wobei der gemeinsame Durchbruch im Einbauzustand eine Walzenanbindung aufnimmt. Einbauzustand bedeutet hierbei, dass die Stachelwalze zur Nutzung komplett zusammengesetzt wurde und in einem Einachsfahrzeug zum Einsatz kommen könnte. Der gemeinsame Durchbruch wird dadurch gebildet, dass der erste Boden eine Öffnung aufweist und der zweite Boden eine weitere Öffnung aufweist. Im Einbauzustand sind die beiden Öffnungen im Wesentlichen kongruent. Durch den Durchbruch ragt eine Antriebswelle der Walzenanbindung, wobei die Antriebswelle gegenseitig durch eine Staubkonstruktion der Art gesichert ist, dass sie zum einen die Antriebswelle mit der Innenschale und der Außenschale verbindet und dabei alle Bauteile kraftübertragend und fixiert sind. Die jeweilige Walzenanbindung sind mit der Kraftübertragung wirkverbunden. Das bedeutet wiederum, dass beim Rotieren der Antriebswelle eine Rotation der Stachelwalze in gleicher Weise stattfindet.

Die Außenschale umfasst die Außenbördelung. Es handelt sich dabei um eine Umkrempelung des Endbereichs der Außenschale. Es handelt sich um den Endbereich, welcher von dem Kühler bzw. dem Antrieb im Einbauzustand weg angeordnet ist. Dabei weist die Innenschale auch im Bereich der Außendarstellung einen größten Umfang auf, welche in die Walzenröhre wenigstens teilweise eingelassen werden kann. Zumindest der eine Teil der Innenschale, welche in die Walzenröhre hineinragt weist entsprechende Bohrungen auf, damit durch Walzenröhrenbohrungen mittels Schrauben oder anderer Befestigungsmittel die Außenschale mit der Walzenröhre verbunden werden kann.

Zuletzt weist die Innenschale eine Abdeckplatte auf. Dabei ist die Abdeckplatte derart in der Innenschale aufgenommen, dass sie im wesentlichen einen Durchgangsschlitz zwischen der Trichterwand der Innenschale und sich selbst lässt, sodass die in dem Innenbereich der Walzenröhre befindliche Luft über diesen Durchgangsschlitz entweichen soll. Auf diese Weise kann ein gezielterer verdichteter Luftzug gestaltet werden. Außerdem dient die Abdeckplatte unter anderem auch dem Schutz der Kraftübertragung.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine erste Teilseitenansicht des erfindungsgemäßen Einachsfahrzeuges von links;
- Figur 2: eine Frontalansicht auf das Einachsfahrzeug aus der Figur 1;
- Figur 3: eine zweite Teilseitenansicht des erfindungsgemäßen Einachsfahrzeuges von rechts;
- Figur 4: eine geschnittene vergrößerte Ansicht einer erfindungsgemäßen Stachelwalze.

### Ausführungsbeispiel

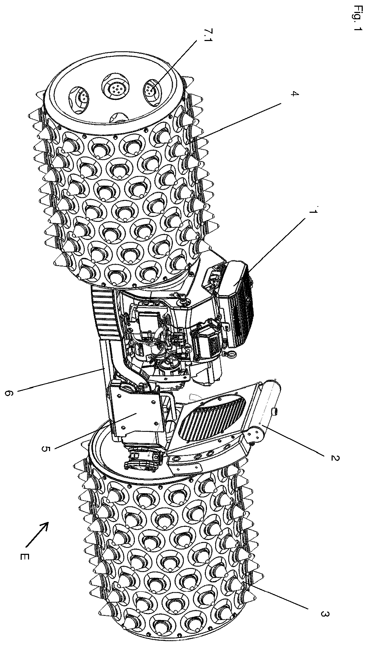

In Figur 1 ist ein Einachsfahrzeug E dargestellt. Es besteht in erster Linie aus einem Antrieb 1, welcher relativ zentral zwischen einer ersten Stachelwalze 3 und einer zweiten Stachelwalze 4 angeordnet ist.

Weiter ist ein Querträger 6 gezeigt, welche von der ersten Stachelwalze 3 zu der zweiten Stachelwalze 4 verläuft und auf welchem der Antrieb 1 sitzt. Dabei ist der Antrieb 1 näher an der zweiten Stachelwalze 4 angeordnet und ein Kühler 2 näher an der ersten Stachelwalze 3.

Weiter ist eine Werkzeugaufnahme 5 gegeben, welche frontseitig schräg vor dem Antrieb 1 angeordnet ist. Diese Werkzeugaufnahme 5 dient der späteren Befestigung eines Arbeitsgeräts, wie beispielsweise einer Mähvorrichtung oder eines anderen landwirtschaftlichen Gerätes.

Wie in der Figur 1 gut zu erkennen ist, ist der Kühler nicht parallel hinter der Werkzeugaufnahme 5 angeordnet, sondern von dem Antrieb 1 weggedreht in Richtung zu der ersten Stachelwalze 3. Das bedeutet, dass der Kühler 2 zu der ersten Stachelwalze 3 hin luftaufnehmend angeordnet ist, wobei die erste Stachelwalze 3 luftdurchlässig ausgebildet ist.

Außerdem ist an einer Stirnfläche der zweiten Stachelwalze 4 eine Ansaugöffnung 7.1 gezeigt. Diese Ansaugöffnung 7.1 dient, wie die anderen gezeigten Ansaugöffnungen auch, dem Einlass von Frischluft in die zweite Stachelwalze 4.

Zuletzt weisen die beiden Stachelwalzen 3, 4 eine Vielzahl von Stacheln 16 auf ihrer Außenfläche bzw. Außenlauffläche auf.

Die in der Figur 1 bereits beschriebenen Merkmale werden in den nachfolgenden Figuren nur dann nochmals gesondert beschrieben, wenn hierfür ein eigener Bedarf besteht. Ansonsten gelten die Ausführungen zu der Figur 1 auch für die Merkmale der übrigen Figuren. Dies gilt gerade dann, wenn die gleichen funktionalen Merkmale mit den gleichen Bezugsziffern versehen sind.

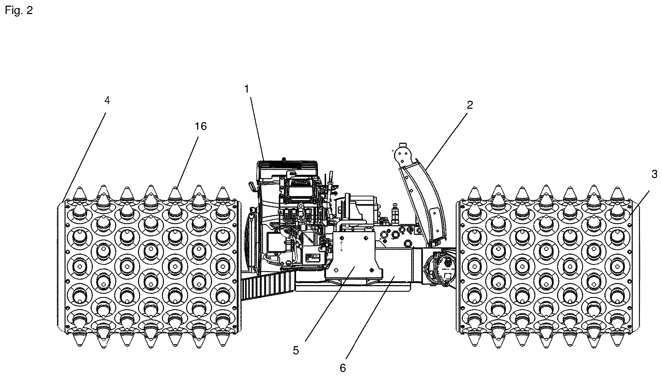

In der Figur 2 ist eine Frontalansicht der Figur 1 gezeigt. Dort ist gezeigt, wie der Kühler 2 leicht zu dem Antrieb 1 hin geneigt, also angewinkelt angeordnet ist, wobei eine Luftaufnahmeseite des Kühlers 2 eindeutig zu der ersten Stachelwalze 3 hin angeordnet ist.

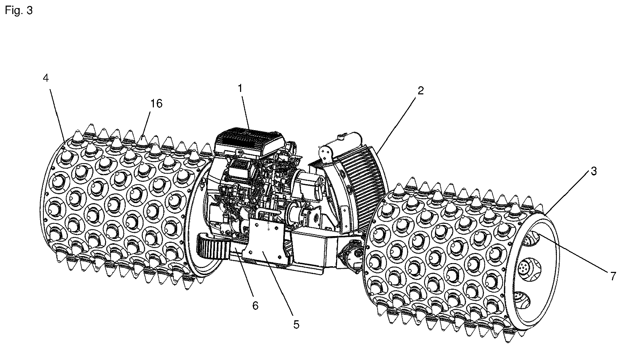

In der Figur 3 ist zusätzlich zu den in den Figuren 1 und 2 beschriebenen Merkmalen zu erkennen, dass eine Ansaugöffnung 7 im Inneren der ersten Stachelwalze 3 vorhanden ist.

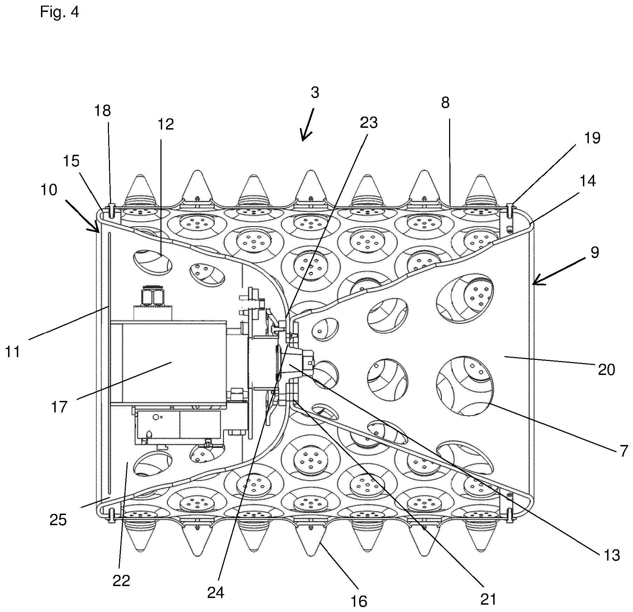

In der Figur 4 ist eine geschnittene Seitenansicht der ersten Stachelwalze 3 gezeigt. Dort ist eine Walzenröhre 8 gezeigt auf deren Außenfläche die Stacheln 16 angeordnet sind. Weiter ist eine Außenschale 9 und eine Innenschale 10 zu erkennen, die im Inneren der Walzenröhre 8 angeordnet sind.

Die Außenschale 9 weist dabei eine erste Trichterform 20 auf. Die erste Trichterform 20 wiederum bildet einen ersten Boden 21 aus. Der erste Boden 21 ist dabei Plan ausgebildet. Die erste Trichterwand 20 bildet dabei die Ansaugöffnung 7 aus. Der erste Boden 21 weist dabei das eine Ende der ersten Trichterform 20 auf. Das andere Ende der ersten Trichterform 20 bildet eine Außenbördelung 14 aus.

Außerdem ist zu erkennen, wie die Außenbördelung 14 über ein zweites Verbindungselement 19 mit der Walzenröhre 8 verbunden ist.

Die Innenschale 10 ist zu dem Antrieb 1 bzw. dem Kühler 2 hin angeordnet. Die Außenschale 9 ist weg vom Antrieb 1 bzw. dem Kühler 2 angeordnet. Die Innenschale 10 bildet eine zweite Trichterform 22 aus, wobei in die zweite Trichterform 22 eine Durchlassöffnung 12 eingelassen ist. Neben der bezeichneten Durchlassöffnung 12 sind auch weitere Durchlassöffnungen ohne Bezugsziffern gezeigt. Die zweite Trichterform 22 bildet einends einen zweiten Boden 23 und andernends eine Innenbördelung 15 aus.

Der erste Boden 21 und der zweite Boden 23 liegen etwa mittig in der ersten Stachelwalze 3 aneinander an. Dabei bilden die beiden Böden 21, 23 einen gemeinsamen Durchbruch 24 aus. In dem Durchbruch 24 wiederum ist Eine Walzenanbindung 13 gezeigt, wobei die Walzenanbindung 13 wiederum mit einer Kraftübertragung 17 verbunden ist.

Außerdem ist ein erstes Verbindungselement 18 gezeigt, welches die Innenschale 10 mit der Walzenröhre 8 verbindet. Weiter seine Abdeckplatte 11 gezeigt, welche an der Kraftübertragung 17 angebunden ist und dabei einen Durchgangsschlitz 25 zwischen der Innenschale 10 und der Abdeckplatte 11 ausbildet.

**Bezugszeichenliste**

| | |
|---|---|
| 1 | Antrieb |
| 2 | Kühler |
| 3 | Erste Stachelwalze |
| 4 | Zweite Stachelwalze |
| 5 | Werkzeugaufnahme |
| 6 | Querträger |
| 7 | Ansaugöffnung |
| 8 | Walzenröhre |
| 9 | Außenschale |
| 10 | Innenschale |
| 11 | Abdeckplatte |
| 12 | Durchlassöffnung |
| 13 | Walzenanbindung |
| 14 | Außenbördelung |
| 15 | Innenbördelung |
| 16 | Stachel |
| 17 | Kraftübertragung |
| 18 | Erstes Verbindungselement |
| 19 | Zweites Verbindungselement |
| 20 | Erste Trichterform |
| 21 | Erster Boden |
| 22 | Zweite Trichterform |
| 23 | Zweiter Boden |
| 24 | Durchbruch |
| 25 | Durchgangsschlitz |
| E | Einachsfahrzeug |

## Patentansprüche

1. Einachsfahrzeug (E) mit einem Antrieb (1), einem Kühler (2) und einer ersten Stachelwalze (3) und einer zweiten Stachelwalze (4), wobei zwischen der ersten Stachelwalze (3) und der zweiten Stachelwalze (4) ein Querträger (6) angeordnet ist, wobei auf dem Querträger (6) der Antrieb (1) und der Kühler (2) angeordnet sind, wobei der Antrieb (1) mit den beiden Stachelwalzen (3, 4) kraftübertragend verbunden ist, und mit Kühler (2) wirkverbunden ist, wobei der Kühler (2) zu der ersten Stachelwalze (3) und/oder der zweiten Stachelwalze (4) hingewandt luftaufnehmend angeordnet ist, wobei die erste Stachelwalze (3) und/oder die zweite Stachelwalze (4) luftdurchlässig ausgebildet ist/sind, wobei die erste Stachelwalze (3) und/oder die zweite Stachelwalze (4) jeweils aus einer Walzenröhre (8) bestehen,
**dadurch gekennzeichnet, dass**
in einem Innenbereich der Walzenröhre (8) eine Außenschale (9) und eine Innenschale (10) angeordnet sind, wobei die Außenschale (9) und die Innenschale (10) eine Trichterform (20, 22) aufweisen, wobei die erste Trichterform (20) der Außenschale (9) einen ersten Boden (21) ausbildet und die zweite Trichterform (22) einen zweiten Boden (23) ausbildet.

2. Einachsfahrzeug (E) mit einem Antrieb (1), einem Kühler (2) und einer ersten Stachelwalze (3) und einer zweiten Stachelwalze (4), wobei zwischen der ersten Stachelwalze (3) und der zweiten Stachelwalze (4) ein Querträger (6) angeordnet ist, wobei auf dem Querträger (6) der Antrieb (1) und der Kühler (2) angeordnet sind, wobei der Antrieb (1) mit den beiden Stachelwalzen (3, 4) kraftübertragend verbunden ist, und mit Kühler (2) wirkverbunden ist, wobei der Kühler (2) in der ersten Stachelwalze (3) und/oder in der zweiten Stachelwalze (4) angeordnet ist, wobei die erste Stachelwalze (3) und/oder die zweite Stachelwalze (4) luftdurchlässig ausgebildet ist/sind, wobei die erste Stachelwalze (3) und/oder die zweite Stachelwalze (4) jeweils aus einer Walzenröhre (8) bestehen
**dadurch gekennzeichnet, dass**
in einem Innenbereich der Walzenröhre (8) eine Außenschale (9) und eine Innenschale (10) angeordnet sind, wobei die Außenschale (9) und die Innenschale (10) eine Trichterform (20, 22) aufweisen, wobei die erste Trichterform (20) der Außenschale (9) einen ersten Boden (21) ausbildet und die zweite Trichterform (22) einen zweiten Boden (23) ausbildet.

3. Einachsfahrzeug (E) nach Anspruch 1 oder 2, **dadurch gekennzeichnet, dass** in einem Innenbereich der Stachelwalzen (3, 4) jeweils eine Kraftübertragung (17) gegeben ist.

4. Einachsfahrzeug (E) nach einem der Ansprüche 1 bis 3, **dadurch gekennzeichnet, dass** die Stachelwalzen (3, 4) auf der Außenseite eine Vielzahl von austauschbaren Stacheln (16) aufweisen.

5. Einachsfahrzeug (E) nach einem der Ansprüche 1 bis 4, **dadurch gekennzeichnet, dass** die Außenschale (9) eine Ansaugöffnung (7) aufweist.

6. Einachsfahrzeug (E) nach einem der Ansprüche 1 bis 5, **dadurch gekennzeichnet, dass** die Innenschale (10) eine Durchlassöffnung (12) aufweist.

7. Einachsfahrzeug (E) nach einem der Ansprüche 1 bis 6, **dadurch gekennzeichnet, dass** der erste Boden (21) und der zweite Boden (23) im Einbauzustand einen gemeinsamen Durchbruch (24) ausbilden, wobei der gemeinsame Durchbruch (24) im Einbauzustand eine Walzenanbindung (13) aufnehmen.

8. Einachsfahrzeug (E) nach Anspruch 7, **dadurch gekennzeichnet, dass** die jeweilige Walzenanbindung (13) mit der Kraftübertragung (17) wirkverbunden sind.

9. Einachsfahrzeug (E) nach einem der Ansprüche 1 bis 8, **dadurch gekennzeichnet, dass** die Außenschale (9) eine Außenbördelung (14) umfasst und die Innenschale (10) eine Innenbördelung (15) umfasst.

10. Einachsfahrzeug (E) nach einem der vorigen Ansprüche, **dadurch gekennzeichnet, dass** die Innenschale (10) eine Abdeckplatte (11) aufweist.

11. Einachsfahrzeug (E) noch einem der vorigen Ansprüche, **dadurch gekennzeichnet, dass** die Stachelwalzen (3, 4) einen Walzenmantel aufweisen, auf dessen Oberfläche sich Vorsprünge mit einer Spitze befinden, wobei die Vorsprünge pyramiden- oder kegelförmig als Stacheln (16) ausgebildet sind und die Spitze auf eine Basis des Vorsprungs aufgesetzt und lösbar mit der Basis verbunden ist, wobei die Vorsprünge zumindest teilweise einstückig aus dem Walzenmantel ausgezogen sind.

## Claims

1. Single-axle vehicle (E) with a drive (1), a cooler (2) and a first spiked roller (3) and a second spiked roller (4), wherein a cross member (6) is arranged between the first spiked roller (3) and the second spiked roller (4), wherein the drive (1) and the cooler (2) are arranged on the cross member (6), wherein the drive (1) is connected in a force-transmitting manner to the two spiked rollers (3, 4) and is operatively connected to the cooler (2), wherein the cooler (2) is arranged facing the first spiked roller (3) and/or the second spiked roller (4) so as to receive air, wherein the first spiked roller (3) and/or the second spiked roller (4) is/are designed to be air-permeable, wherein the first spiked roller (3) and/or the second spiked roller (4) each consist of a roller tube (8),
**characterized in that**
in an inner section of the roller tube (8) an outer shell (9) and an inner shell (10) are arranged, wherein the outer shell (9) and the inner shell (10) have a funnel shape (20, 22), wherein the first funnel shape (20) of the outer shell (9) forms a first base (21) and the second funnel shape (22) forms a second base (23).

2. Single-axle vehicle (E) with a drive (1), a cooler (2) and a first spiked roller (3) and a second spiked roller (4), wherein a cross member (6) is arranged between the first spiked roller (3) and the second spiked roller (4), wherein the drive (1) and the cooler (2) are arranged on the cross member (6), wherein the drive (1) is connected in a force-transmitting manner to the two spiked rollers (3, 4) and is operatively connected to the cooler (2), wherein the cooler (2) is arranged in the first spiked roller (3) and/or in the second spiked roller (4), wherein the first spiked roller (3) and/or the second spiked roller (4) is/are designed to be air-permeable, wherein the first spiked roller (3) and/or the second spiked roller (4) each consist of a roller tube (8)
**characterized in that**
in an inner section of the roller tube (8) an outer shell (9) and an inner shell (10) are arranged, wherein the outer shell (9) and the inner shell (10) have a funnel shape (20, 22), wherein the first funnel shape (20) of the outer shell (9) forms a first base (21) and the second funnel shape (22) forms a second base (23).

3. Single-axle vehicle (E) according to claim 1 or 2, **characterized in that** in an inner section of the spiked rollers (3, 4) a power transmission (17) is respectively provided.

4. Single-axle vehicle (E) according to any one of the claims 1 to 3, **characterized in that** the spiked rollers (3, 4) have a plurality of replaceable spikes (16) on the outside.

5. Single-axle vehicle (E) according to any one of the claims 1 to 4, **characterized in that** the outer shell (9) has an aspiration port (7).

6. Single-axle vehicle (E) according to any one of the claims 1 to 5, **characterized in that** the inner shell (10) has a passage opening (12).

7. Single-axle vehicle (E) according to any one of the claims 1 to 6, **characterized in that** the first base (21) and the second base (23) form a common aperture (24) in the installed state, wherein the common aperture (24) receives a roller connection (13) in the installed state.

8. Single-axle vehicle (E) according to claim 7, **characterized in that** the respective roller connection (13) is operatively connected to the power transmission (17).

9. Single-axle vehicle (E) according to any one of the claims 1 to 8, **characterized in that** the outer shell (9) comprises an outer flange (14) and the inner shell (10) comprises an inner flange (15).

10. Single-axle vehicle (E) according to any one of the preceding claims, **characterized in that** the inner shell (10) has a cover plate (11).

11. Single-axle vehicle (E) according to one of the preceding claims, **characterized in that** the spiked rollers (3, 4) have a roller shell, on which surface projections with a tip are located, wherein the projections are pyramid-shaped or cone-shaped as spikes (16) and the tip is placed on a base of the projection and is detachably connected to the base, wherein the projections are at least partially integrally extended from the roller shell.

## Revendications

1. Véhicule à essieu simple (E) comportant un entraînement (1), un refroidisseur (2) et un premier rouleau à pointes (3) et un second rouleau à pointes (4), une poutre transversale (6) étant disposée entre le premier rouleau à pointes (3) et le second rouleau à pointes (4), l'entraînement (1) et le refroidisseur (2) étant disposés sur la poutre transversale (6), l'entraînement (1) étant relié par transmission de force aux deux rouleaux à pointes (3, 4), et par liaison fonctionnelle au refroidisseur (2), le refroidisseur (2) étant disposé, tourné vers le premier rouleau à pointes (3) et/ou vers le second rouleau à pointes (4), de façon à aspirer de l'air, le premier rouleau à pointes (3) et/ou le second rouleau à pointes (4) étant conçus perméables à l'air, le premier rouleau à pointes (3) et/ou le second rouleau à pointes (4) étant respectivement constitués d'un tube de rouleau (8),
**caractérisé en ce que**
une coque externe (9) et une coque interne (10) sont disposées dans une zone interne du tube de rouleau (8), la coque externe (9) et la coque interne (10) présentant une forme d'entonnoir (20, 22), la première forme d'entonnoir (20) de la coque externe (9) formant un premier fond (21) et la seconde forme d'entonnoir (22) formant un second fond (23).

2. Véhicule à essieu simple (E) comportant un entraînement (1), un refroidisseur (2) et un premier rouleau à pointes (3) et un second rouleau à pointes (4), une poutre transversale (6) étant disposée entre le premier rouleau à pointes (3) et le second rouleau à pointes (4), l'entraînement (1) et le refroidisseur (2) étant disposés sur la poutre transversale (6), l'entraînement (1) étant relié par transmission de force aux deux rouleaux à pointes (3, 4), et par liaison fonctionnelle au refroidisseur (2), le refroidisseur (2) étant disposé dans le premier rouleau à pointes (3) et/ou dans le second rouleau à pointes (4), le premier rouleau à pointes (3) et/ou le second rouleau à pointes (4) étant conçus perméables à l'air, le premier rouleau à pointes (3) et/ou le second rouleau à pointes (4) étant respectivement constitués d'un tube de rouleau (8)
**caractérisé en ce que**
une coque externe (9) et une coque interne (10) sont disposées dans une zone interne du tube de rouleau (8), la coque externe (9) et la coque interne (10) présentant une forme d'entonnoir (20, 22), la première forme d'entonnoir (20) de la coque externe (9) formant un premier fond (21) et la seconde forme d'entonnoir (22) formant un second fond (23).

3. Véhicule à essieu simple (E) selon la revendication 1 ou 2, **caractérisé en ce qu'**une transmission de force (17) est respectivement constatée dans une zone interne des rouleaux à pointes (3, 4).

4. Véhicule à essieu simple (E) selon l'une des revendications 1 à 3, **caractérisé en ce que** les rouleaux à pointes (3, 4) présentent, sur la face externe, une pluralité de pointes (16) interchangeables.

5. Véhicule à essieu simple (E) selon l'une des revendications 1 à 4, **caractérisé en ce que** la coque externe (9) présente une ouverture d'admission (7).

6. Véhicule à essieu simple (E) selon l'une des revendications 1 à 5, **caractérisé en ce que** la coque interne (10) présente une ouverture de passage (12).

7. Véhicule à essieu simple (E) selon l'une des revendications 1 à 6, **caractérisé en ce que** le premier fond (21) et le second fond (23) réalisent un passage commun (24) dans l'état d'assemblage, le passage commun (24) recevant un raccord à rouleaux (13) dans l'état d'assemblage.

8. Véhicule à essieu simple (E) selon la revendication 7, **caractérisé en ce que** le raccord à rouleaux (13) respectif est en liaison fonctionnelle avec la transmission de force (17).

9. Véhicule à essieu simple (E) selon l'une des revendications 1 à 8, **caractérisé en ce que** la coque externe (9) présente un rebord externe (14) et la coque interne (10) présente un rebord interne (15).

10. Véhicule à essieu simple (E) selon l'une des revendications précédentes, **caractérisé en ce que** la coque interne (10) présente une plaque de recouvrement (11).

11. Véhicule à essieu simple (E) selon l'une des revendications précédentes, **caractérisé en ce que** les rouleaux à pointes (3, 4) présentent une enveloppe de rouleau sur la surface de laquelle sont prévues des saillies comportant un sommet, les saillies étant conçues comme des pointes (16) pyramidales ou coniques et le sommet étant posé sur une base de la saillie et relié de manière amovible à la base, les saillies étant au moins partiellement intégralement extraites de l'enveloppe de rouleau.
